# EUROPEAN PATENT APPLICATION

(11) **EP 4 561 160 A1**
(43) Date of publication of application: **28.05.2025**
(21) Application number: 24853039.6
(22) Date of filing: 02.07.2024
(51) Int. Cl.: H04W 24/08

(54) **APPLICATION RATE-LIMITING METHOD AND APPARATUS FOR TERMINAL DEVICE, AND DEVICE**

(30) Priority: 28.09.2023 CN 202311279571
(71) Applicant: Ruijie Networks Co., Ltd., Fuzhou, Fujian 350002 (CN)
(72) Inventor: WANG, Ruoming, Fuzhou, Fujian 350002 (CN)
(74) Representative: Mathys & Squire
(86) International application number: PCT/CN2024/103010
(87) International publication number: WO 2025/066385

(57) **Abstract**

This application discloses a method and an apparatus for limiting rates of applications on a terminal device, and a device. The method includes: determining whether signal quality of a wireless communication environment is less than a preset signal quality threshold; and in a case that the signal quality is less than the preset signal quality threshold, performing rate limiting on the applications of the terminal device based on application levels and traffic proportions of the applications of the terminal device.

## Description

### CROSS-REFERENCE TO RELATED APPLICATIONS

This application claims priority to Chinese Patent Application No. 202311279571.9, filed with the China National Intellectual Property Administration on September 28, 2023 and entitled "METHOD AND APPARATUS FOR LIMITING RATES OF APPLICATIONS ON TERMINAL DEVICE, AND DEVICE", which is incorporated herein by reference in its entirety.

### TECHNICAL FIELD

This application relates to the field of wireless communication technologies, and in particular, to a method and an apparatus for limiting rates of applications on a terminal device, and a device.

### BACKGROUND

Currently, a wireless service set usually includes one or more access controllers (ACs), a plurality of access points (APs), and a plurality of user stations (STAs). Generally, a STA may also be referred to as a terminal, and may be a mobile phone, a computer, or another device capable of connecting to a wireless communication network.

In the wireless service set, a network connection may be implemented by using Wireless Fidelity (Wi-Fi). After a STA establishes a communication connection to an AP, the STA can perform network transmission through the AP.

### SUMMARY

Embodiments of this application provide a method and an apparatus for limiting rates of applications on a terminal device, and a device.

According to a first aspect, this application provides a method for limiting rates of applications on a terminal device. The method is applied to an access point AP. The method includes: comparing signal quality of a wireless communication environment with a preset signal quality threshold; and in a case that the signal quality of the wireless communication environment is less than the signal quality threshold, performing rate limiting on the applications of the terminal device based on application levels and traffic proportions of the applications of the terminal device.

In a possible implementation, the method further includes: determining the signal quality of the wireless communication environment based on quality factor information and a weight corresponding to the quality factor information, where the quality factor information includes at least one of the following: channel utilization, a wireless packet loss rate, a wireless retransmission rate, or signal strength of the terminal device connected to the AP.

In a possible implementation, before the performing the rate limiting on the applications of the terminal device based on the application levels and the traffic proportions of the applications of the terminal device, the method further includes: determining, in response to an application level configuration instruction, the application levels of the applications of the terminal device; or determining, based on use frequency of the applications of the terminal device, the application levels of the applications of the terminal device.

In a possible implementation, the application levels include a first level, a second level, and a third level.

In a possible implementation, importance of an application at the first level is higher than importance of an application at the second level, and the importance of the application at the second level is higher than importance of an application at the third level.

In a possible implementation, the performing the rate limiting on the applications of the terminal device based on the application levels and the traffic proportions of the applications of the terminal device includes: when a traffic proportion of the application at the first level is less than a traffic proportion threshold, performing rate limiting on the application at the second level based on a preset first rate limit proportion, and performing rate limiting on the application at the third level based on a preset second rate limit proportion.

In a possible implementation, the performing the rate limiting on the applications of the terminal device based on the application levels and the traffic proportions of the applications of the terminal device includes: when a traffic proportion of the application at the first level is less than a traffic proportion threshold, performing rate limiting on the application at the second level based on a preset first rate limit proportion, or performing rate limiting on the application at the third level based on a preset second rate limit proportion.

In a possible implementation, the first rate limit proportion and the second rate limit proportion are the same.

In a possible implementation, the first rate limit proportion and the second rate limit proportion are different.

In a possible implementation, the performing the rate limiting on the applications of the terminal device based on the application levels and the traffic proportions of the applications of the terminal device includes: when a traffic proportion of the application at the first level is greater than or equal to a traffic proportion threshold, performing rate limiting on the application at the first level, the application at the second level, and the application at the third level respectively based on third rate limit proportions respectively corresponding to the application at the first level, the application at the second level, and the application at the third level.

In a possible implementation, the performing the rate limiting on the application at the first level, the application at the second level, and the application at the third level respectively based on the third rate limit proportions respectively corresponding to the application at the first level, the application at the second level, and the application at the third level includes: multiplying a rate limit factor proportion corresponding to an application at each level by a preset fourth rate limit proportion to obtain a rate limit proportion difference corresponding to the application at each level, where the rate limit factor proportion is used to adjust a rate limit degree of the application; subtracting the rate limit proportion difference corresponding to the application at each level from the preset fourth rate limit proportion to obtain a third rate limit proportion corresponding to the application at each level; and performing rate limiting on the application at each level based on the third rate limit proportion.

In a possible implementation, the performing the rate limiting on the application at the first level, the application at the second level, and the application at the third level respectively based on the third rate limit proportions respectively corresponding to the application at the first level, the application at the second level, and the application at the third level includes: multiplying a rate limit factor proportion corresponding to an application at each level by a preset fourth rate limit proportion to obtain a third rate limit proportion corresponding to the application at each level; and performing rate limiting on the application at each level based on the third rate limit proportion.

In a possible implementation, the fourth rate limit proportion, the first rate limit proportion, and the second rate limit proportion are the same.

In a possible implementation, the performing the rate limiting on the application at the first level, the application at the second level, and the application at the third level respectively based on the third rate limit proportions respectively corresponding to the application at the first level, the application at the second level, and the application at the third level includes: determining, in response to a rate limit proportion configuration instruction, the third rate limit proportions respectively corresponding to the application at the first level, the application at the second level, and the application at the third level; and performing the rate limiting on the application at the first level, the application at the second level, and the application at the third level respectively based on the third rate limit proportions respectively corresponding to the application at the first level, the application at the second level, and the application at the third level.

In a possible implementation, before the performing the rate limiting on the applications of the terminal device based on the application levels and the traffic proportions of the applications of the terminal device, the method further includes: determining the traffic proportion threshold based on a traffic proportion of the application at the second level and a traffic proportion of the application at the third level; or determining the traffic proportion threshold in response to a traffic proportion threshold configuration instruction.

According to a second aspect, this application provides an apparatus for limiting rates of applications on a terminal device. The apparatus is applied to an access point AP. The apparatus includes: a signal quality judgment module, configured to compare signal quality of a wireless communication environment with a preset signal quality threshold; and a rate limiting module, configured to perform rate limiting on the applications of the terminal device based on application levels and traffic proportions of the applications of the terminal device in a case that the signal quality of the wireless communication environment is less than the signal quality threshold.

In a possible implementation, the apparatus further includes a signal quality determining module, configured to determine the signal quality of the wireless communication environment based on quality factor information and a weight corresponding to the quality factor information.

In a possible implementation, the quality factor information includes at least one of the following: channel utilization, a wireless packet loss rate, a wireless retransmission rate, or signal strength of the terminal device connected to the AP.

In a possible implementation, the rate limiting module is configured to determine, in response to an application level configuration instruction, the application levels of the applications of the terminal device; or determine, based on use frequency of the applications of the terminal device, the application levels of the applications of the terminal device.

In a possible implementation, the application levels include a first level, a second level, and a third level.

In a possible implementation, importance of an application at the first level is higher than importance of an application at the second level, and the importance of the application at the second level is higher than importance of an application at the third level.

In a possible implementation, the rate limiting module is configured to: when a traffic proportion of the application at the first level is less than a traffic proportion threshold, perform rate limiting on the application at the second level based on a preset first rate limit proportion, and perform rate limiting on the application at the third level based on a preset second rate limit proportion; or when a traffic proportion of the application at the first level is less than a traffic proportion threshold, perform rate limiting on the application at the second level based on a preset first rate limit proportion, or perform rate limiting on the application at the third level based on a preset second rate limit proportion.

In a possible implementation, the rate limiting module is configured to: when a traffic proportion of the application at the first level is greater than or equal to a traffic proportion threshold, perform rate limiting on the application at the first level, the application at the second level, and the application at the third level respectively based on third rate limit proportions respectively corresponding to the application at the first level, the application at the second level, and the application at the third level.

In a possible implementation, the rate limiting module is configured to: multiply a rate limit factor proportion corresponding to an application at each level by a preset fourth rate limit proportion to obtain a rate limit proportion difference corresponding to the application at each level, where the rate limit factor proportion is used to adjust a rate limit degree of the application; subtract the rate limit proportion difference corresponding to the application at each level from the preset fourth rate limit proportion to obtain a third rate limit proportion corresponding to the application at each level; and perform rate limiting on the application at each level based on the third rate limit proportion.

In a possible implementation, the rate limiting module is configured to: multiply a rate limit factor proportion corresponding to an application at each level by a preset fourth rate limit proportion to obtain a third rate limit proportion corresponding to the application at each level; and perform rate limiting on the application at each level based on the third rate limit proportion.

In a possible implementation, the rate limiting module is configured to: determine, in response to a rate limit proportion configuration instruction, the third rate limit proportions respectively corresponding to the application at the first level, the application at the second level, and the application at the third level; and perform the rate limiting on the application at the first level, the application at the second level, and the application at the third level respectively based on the third rate limit proportions respectively corresponding to the application at the first level, the application at the second level, and the application at the third level.

In a possible implementation, the rate limiting module is configured to determine the traffic proportion threshold in the following manner: determining the traffic proportion threshold based on a traffic proportion of the application at the second level and a traffic proportion of the application at the third level; or determining the traffic proportion threshold in response to a traffic proportion threshold configuration instruction.

According to a third aspect, this application provides an electronic device, including a processor and a memory. The memory is configured to store processor-executable instructions. The processor is configured to execute the executable instructions to implement the method for limiting rates of applications on a terminal device according to the first aspect.

According to a fourth aspect, this application provides a computer-readable storage medium. When instructions in the computer-readable storage medium are executed by a processor in an electronic device, the electronic device is enabled to perform the method for limiting rates of applications on a terminal device according to the first aspect.

According to a fifth aspect, this application provides a computer program product, including a computer program. When the computer program is executed by a processor, the method for limiting rates of applications on a terminal device according to the first aspect is implemented.

In the embodiments of this application, it is determined whether the signal quality of the wireless communication environment is less than the preset signal quality threshold; and in the case that the signal quality is less than the preset signal quality threshold, it is determined that the signal quality is poor. In this case, rate limiting is performed on different applications of the terminal device based on application levels and traffic proportions of the different applications. In this way, rates of the applications on the terminal are dynamically limited, normal use of critical services is ensured, and high efficiency is achieved, while no manual intervention is needed.

Other features and advantages of this application will be set forth later in the specification, and in part will be readily apparent from the specification, or may be understood by implementing this application. Objectives and other advantages of this application may be achieved and obtained by using a structure particularly stated in the written specification, claims, and accompanying drawings.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.
FIG. 1 is an overall schematic flowchart of a method for limiting rates of applications on a terminal device according to an embodiment of this application.
FIG. 2 is another schematic flowchart of a method for limiting rates of applications on a terminal device according to an embodiment of this application.
FIG. 3 is another schematic flowchart of a method for limiting rates of applications on a terminal device according to an embodiment of this application.
FIG. 4 is a schematic diagram of a structure of an apparatus 400 for limiting rates of applications on a terminal device according to an embodiment of this application.
FIG. 5 is a schematic diagram of a structure of an electronic device according to an embodiment of this application.

### DESCRIPTION OF EMBODIMENTS

To make the objectives, technical solutions, and advantages of the embodiments of this application clearer, the following clearly and thoroughly describes the technical solutions in the embodiments of this application with reference to the accompanying drawings in the embodiments of this application. The described embodiments are merely some but not all of the embodiments of this application. All other embodiments obtained by a person of ordinary skill in the art based on the embodiments of this application without creative efforts shall fall within the protection scope of this application.

Moreover, in the description of the embodiments of this application, unless otherwise specified, "/" indicates an "or" relationship. For example, the term "A/B" may represent A or B. The term "and/or" in this specification is only an association relationship for describing associated objects and represents that three relationships may exist. For example, "A and/or B" may represent the following three cases: Only A exists, both A and B exist, and only B exists. In addition, in the description of the embodiments of this application, the term "a plurality of" indicates two or more.

Hereinafter, the terms "first" and "second" are intended only for description, and shall not be understood as an indication or implication of relative importance or an implicit indication of a quantity of indicated technical features. Therefore, a feature defined by "first" or "second" may explicitly or implicitly include one or more features. In the description of the embodiments of this application, unless otherwise specified, the term "a plurality of" means two or more.

Currently, a wireless service set usually includes one or more ACs, a plurality of APs, and a plurality of STAs.

In the wireless service set, a communication connection may be implemented by using a Wi-Fi signal. After a STA is associated with an AP, the STA can perform network communication through the AP. In the process of network communication, the STA may use a variety of applications. When different applications are using a wireless network to transmit data, and some applications are transmitting a large amount of data, due to a bandwidth limitation of the wireless network, other applications may be affected.

The following technical solutions may be used to reduce impact on data transmission of critical applications.

### Solution 1: Setting priorities based on packet streams.

A Wi-Fi multimedia (Wi-Fi multimedia, WMM) technology is a technology based on the 802.11 standard to optimize performance of a wireless network and improve quality of audio and video transmission. The WMM protocol classifies packets into different access categories. An access priority of time-sensitive data such as video and audio data is higher than an access priority of common data.

A WMM access category field in a packet may be changed by using the 802.11 standard protocol, to increase an access priority of the packet, increase competitiveness of a data stream, and ensure critical services.

### Solution 2: Limiting terminal rates.

Differentiated limiting is performed on rates of different terminals. For example, rates of terminals of common users are limited, but rates of terminals of advanced users are not limited. Therefore, an objective of optimizing the wireless network is achieved, and this can improve service experience of critical users to some extent.

### Solution 3: Limiting application rates.

Rate limit thresholds are preset for different applications, and rate limiting is performed when an application reaches a rate limit threshold. Therefore, rate limit thresholds for critical services can be set to be high, to reserve sufficient bandwidths for the critical services.

In the foregoing technical solutions, in a case that channel utilization of the wireless network is excessively high, it is difficult to achieve an ideal effect by setting priorities based on packet streams. Limiting terminal rates cannot identify critical application services in a terminal, and the rate limiting method is too simple. If rate limiting is performed for an application based on a preset rate limiting strategy, operations are complicated, and efficiency is low.

Therefore, the rate limiting solutions in the related art cannot improve operation and maintenance efficiency while ensuring normal operation of critical services.

Embodiments of this application provide a method and an apparatus for limiting rates of applications on a terminal device, and a device.

In a possible implementation, it is determined whether signal quality of a wireless communication environment is less than a preset signal quality threshold, and in a case that the signal quality is less than the preset signal quality threshold, it is determined that the signal quality is poor. In this case, rate limiting may be performed on different applications of the terminal device based on application levels and traffic proportions of the different applications. In the embodiments of this application, it is determined whether the signal quality of the wireless communication environment is less than the preset signal quality threshold; and in the case that the signal quality is less than the preset signal quality threshold, it is determined that the signal quality is poor, and rate limiting is performed on the different applications of the terminal device based on the application levels and traffic proportions of the different applications. In this way, rates of the applications of the terminal are dynamically limited, normal use of critical services is ensured, and operation and maintenance efficiency can be improved, while no manual intervention is needed.

The following briefly describes application scenarios to which the technical solutions in the embodiments of this application are applicable. It should be noted that the application scenarios described below are merely used to describe the embodiments of this application, rather than limiting the embodiments of this application. In a specific implementation, the technical solutions provided in the embodiments of this application can be applied flexibly based on actual requirements.

For ease of understanding, the dynamic application rate limiting method for a terminal according to the embodiments of this application is hereinafter further described with reference to the accompanying drawings.

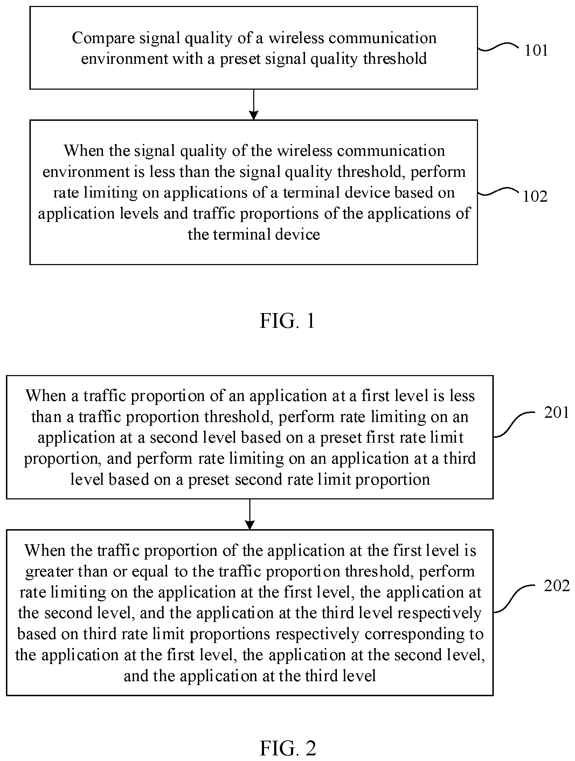

In a possible implementation, this application provides a method for limiting rates of applications on a terminal device. The method is applied to an access point AP. A procedure of the method is shown in FIG. 1 and includes the following content.

In step 101, signal quality of a wireless communication environment is compared with a preset signal quality threshold.

In a possible implementation, before the signal quality of the wireless communication environment is compared with the preset signal quality threshold, an AC sends a function configuration instruction to the AP, where the function configuration instruction instructs the AP to configure a dynamic rate limiting function for the terminal device connected to the AP, which is equivalent to turning on a dynamic rate limiting function configuration switch.

In a possible implementation, the signal quality of the wireless communication environment refers to transmission quality of a wireless signal in the wireless communication environment. The signal quality of the wireless communication environment may be represented by quality factor information.

In a possible implementation, the AP may automatically collect quality factor information of a wireless signal, including but not limited to information such as channel utilization, a wireless retransmission rate, a wireless packet loss rate, and signal strength of the terminal device.

In a possible implementation, before the signal quality of the wireless communication environment is compared with the preset signal quality threshold, in this embodiment of this application, the signal quality of the wireless communication environment is determined based on quality factor information and a weight corresponding to the quality factor information.

In a possible implementation, the quality factor information includes at least one of the following: channel utilization, a wireless packet loss rate, a wireless retransmission rate, or signal strength of each terminal device connected to the AP.

For example, when the quality factor information includes all of the foregoing four quality factors, in this embodiment of this application, different weights are assigned to the four quality factors. A ratio of the weights is 4:2:2:2, that is, the weights are 40%, 20%, 20%, and 20% respectively. According to a 100-point mechanism, a sum of a score of the channel utilization, a score of the wireless packet loss rate, a score of the wireless retransmission rate, and a score of the signal strength of the terminal device connected to the AP is used as the signal quality of the wireless communication environment, and a full score is equal to 100 points. A score less than 60 corresponds to poor communication quality, a score equal to or greater than 60 and less than 80 corresponds to general communication quality, and a score equal to or greater than 80 corresponds to excellent communication quality. Dynamic rate limiting is not performed when the communication quality is general or excellent, and dynamic rate limiting is performed when the communication quality is poor.

Formulas for calculating scores of the quality factors are as follows. Score of the channel utilization = 100 * 4/(4 + 2 + 2 + 2) * (1 - Current channel utilization). Score of the wireless packet loss rate = 100 * 2/(4 + 2 + 2 + 2) * (1 - Current wireless packet loss rate) * Scaling factor. Score of the wireless retransmission rate = 100 * 2/(4 + 2 + 2 + 2) * (1 - Current wireless retransmission rate) * Scaling factor.

The score of the signal strength of the terminal device connected to the AP is as follows:
when (1 - (Absolute value of a sum of signal strength of all terminal devices/(65 * Total quantity of terminal devices))) is less than or equal to 0, the score is 0; and
when (1 - (Absolute value of a sum of signal strength of all terminal devices/(65 * Total quantity of terminal devices))) is greater than 0, the score is as follows: 100 * 2/(4 + 2 + 2 + 2) * (1 - (Absolute value of a sum of signal strength of all terminal devices/(65 * Total quantity of terminal devices))).

In a possible implementation, one or more terminal devices may be connected to the AP.

A unit of signal strength is usually decibel-milliwatt (dBm), which is a standard unit of measurement for measuring radio power. The signal strength is usually negative. The larger the absolute value, the weaker the signal strength. For example, -40 dBm to -50 dBm indicate that terminal signals are excellent; -50 dBm to -60 dBm mean that signals are very good ; -60 dBm to -70 dBm mean that signals are good; -70 dBm to -80 dBm mean that signals are relatively weak; -80 dBm to -90 dBm mean that signals are weak; and values less than -90 mean that communication is possible but signals are extremely weak.

In a possible implementation, it is considered that signal strength of -65 is relatively good, and therefore an absolute value (that is, 65) of -65 is set as a critical value of the signal strength. In other implementations, another value such as 64 or 66 may also be set as the critical value of the signal strength. Because the signal strength is usually negative, the larger the absolute value, the weaker the signal strength. If the score of the signal strength of the terminal is less than or equal to 0, it indicates that the signal strength in the environment is relatively poor, resulting in a score of 0. If the score of the signal strength of the terminal is greater than 0, it indicates that the signal strength in the environment is relatively good, allowing for normal scoring.

Based on the foregoing formulas for calculating the scores of the four quality factors, the signal quality of the wireless communication environment can be determined in this embodiment of this application.

In a possible implementation, the quality factors in this embodiment of this application are not limited to the foregoing four quality factors. The quality factors may be set by a user based on a user requirement, and other quality factors may be selected to represent the signal quality of the wireless communication environment.

In a possible implementation, scaling factors may be used to compensate for the score of the wireless packet loss rate and the score of the wireless retransmission rate. The scaling factor corresponding to the wireless packet loss rate is used to compensate for the wireless packet loss rate, and the scaling factor corresponding to the wireless retransmission rate is used to compensate for the wireless retransmission rate.

The two scaling factors may be set by a user based on a user requirement.

In a possible implementation, the scaling factor may be a value less than 1. Generally, when an obvious packet loss or retransmission occurs in the terminal device, it indicates that a severe signal quality problem occurs in the wireless communication environment. A value less than 1 may be selected as the scaling factor to reduce the score of the wireless packet loss rate or wireless retransmission rate to reflect the severe signal quality problem in the current wireless communication environment.

In a possible implementation, the scaling factor may be a value greater than 1. When an obvious packet loss or retransmission occurs in the terminal device, it is generally considered that a severe signal quality problem occurs in the wireless communication environment. However, in some special cases, an obvious packet loss or retransmission that occurs in the terminal device may not be caused by a poor wireless communication environment, but caused by a problem of the terminal device itself. In this special case, a value greater than 1 may be selected as the scaling factor to magnify the score of the wireless packet loss rate or wireless retransmission rate, thereby avoiding incorrect evaluation of the signal quality of the wireless communication environment caused by the terminal device itself.

In step 102, if the signal quality of the wireless communication environment is less than the signal quality threshold, rate limiting is performed on an application of the terminal device based on an application level and a traffic proportion of the application of the terminal device. The application level of the application of the terminal device may be specified by a user.

In a possible implementation, to ensure good use experience in critical services and achieve a good network use effect, in this embodiment of this application, application levels of applications of the terminal device may be classified into a first level, a second level, and a third level. An application at the first level is a critical application, an application at the second level is a common application, and an application at the third level is a to-be-suppressed application. Importance of the application at the first level is the highest, and the application at the first level needs to be ensured with a first priority. Importance of the application at the second level is between importance of the application at the first level and importance of the application at the third level, and the application at the second level needs to be ensured with a second priority. Importance of the application at the third level is the lowest, and the application at the third level needs to be ensured with a third priority. This step of classifying applications into different levels realizes differentiation of critical applications. Applications at different levels and meanings thereof are shown in the following Table 1.

**Table 1**

| Classification of applications | Meaning |
|---|---|
| Critical application | An application that needs to be ensured, for example, an application with a high use frequency such as a special office software |
| To-be-suppressed application | An application that needs to be suppressed, for example, an application that should not be used in working hours |
| Common application | An application that is not marked as a critical or to-be-suppressed application is a common application |

It should be supplemented that in addition to the three levels, the application levels may also be classified into a plurality of levels, which may be set by a user based on a user requirement.

In a possible implementation, in this embodiment of this application, an application level of each application of the terminal device may be determined in response to an application level configuration instruction. The application level configuration instruction is used to indicate application levels corresponding to different applications of the terminal device. For example, the application level configuration instruction indicates that an application level of application A is the first level, and that an application level of application B is the second level, thereby determining the application level of each application of the terminal device.

In a possible implementation, the application level of each application of the terminal device is determined based on a use frequency of the application of the terminal device. For example, if the applications of the terminal device, sorted in descending order of use frequencies, are application A, application B, and application C, it is determined that application levels of application A, application B, and application C are the first level, the second level, and the third level respectively.

In a possible implementation, a procedure for performing rate limiting on different applications of the terminal device based on application levels and traffic proportions of the different applications is shown in FIG. 2, and may include the following content.

In step 201, when a traffic proportion of the application at the first level is less than a traffic proportion threshold, rate limiting is performed on the application at the second level based on a preset first rate limit proportion, and rate limiting is performed on the application at the third level based on a preset second rate limit proportion.

In a possible implementation, the traffic proportion threshold is determined based on a traffic proportion of the application at the second level and a traffic proportion of the application at the third level. For example, the traffic proportion threshold may be set to twice a sum of the traffic proportion of the application at the second level and the traffic proportion of the application at the third level. It should be noted that the traffic proportion threshold may be set to another value based on a specific scenario requirement. When the traffic proportion of the application at the first level is less than twice the sum of the traffic proportion of the application at the second level and the traffic proportion of the application at the third level, it indicates that the application at the first level is not ensured well, and therefore rates of applications at other levels need to be limited to ensure the traffic proportion of the application at the first level. Rate limiting is performed on the application at the second level based on the preset first rate limit proportion, and rate limiting is performed on the application at the third level based on the preset second rate limit proportion. In comparison with a manner of only performing rate limiting on an application at a certain level to ensure the application at the first level, performing rate limiting on both the application at the second level and the application at the third level has relatively limited impact on an application at any level, thereby better ensuring normal running of the terminal device.

It should be noted that the preset first rate limit proportion may be the same as or different from the preset second rate limit proportion. When the two are different, the second rate limit proportion may be set to be greater than the first rate limit proportion, to preferentially ensure stable running of the application at the second level.

For example, the traffic proportion of the application at the second level is 15%, and the traffic proportion of the application at the third level is 15%. It is determined that the traffic proportion threshold is 60%, that is, twice the sum of the traffic proportion of the application at the second level and the traffic proportion of the application at the third level. It should be noted that the traffic proportion threshold may be set to another value based on a specific scenario requirement. The preset first rate limit proportion is 20% (that is, rate limiting is performed for the application by reducing a current actual rate by 20%), and the preset second rate limit proportion is 30% (that is, rate limiting is performed for the application by reducing a current actual rate by 30%). If the traffic proportion of the application at the first level is 50%, which is less than 60%, in this embodiment of this application, rate limiting is performed for the application at the second level by reducing the current actual rate by 20%, and rate limiting is performed for the application at the third level by reducing the current actual rate by 30%.

In a possible implementation, the traffic proportion threshold may also be determined in response to a traffic proportion threshold configuration instruction. For example, the traffic proportion threshold configuration instruction is used to indicate that the traffic proportion threshold is 60%.

In a possible implementation, when the traffic proportion of the application at the first level is less than the traffic proportion threshold, rate limiting is performed on the application at the second level based on the preset first rate limit proportion, and rate limiting is performed on the application at the third level based on the preset second rate limit proportion.

In a possible implementation, it is possible to select to perform rate limiting on only the application at the second level or only the application at the third level. In a possible implementation, rate limiting may be performed on only the application at the third level, to preferentially ensure traffic occupancy of the application at the second level.

It should be noted that the preset first rate limit proportion may be the same as or different from the preset second rate limit proportion.

For example, the traffic proportion of the application at the second level is 15%, and the traffic proportion of the application at the third level is 15%. It is determined that the traffic proportion threshold is 60%, and that both the first rate limit proportion and the second rate limit proportion are preset to 20% (that is, rate limiting is performed for the application by reducing the current actual rate by 20%). If the traffic proportion of the application at the first level is 50%, which is less than 60%, in this embodiment of this application, rate limiting is performed for the application at the second level by reducing the current actual rate by 20%, or rate limiting is performed for the application at the third level by reducing the current actual rate by 20%.

In step 202, when the traffic proportion of the application at the first level is greater than or equal to the traffic proportion threshold, rate limiting is performed on the application at the first level, the application at the second level, and the application at the third level respectively based on third rate limit proportions respectively corresponding to the application at the first level, the application at the second level, and the application at the third level.

In a possible implementation, the traffic proportion threshold is determined based on the traffic proportion of the application at the second level and the traffic proportion of the application at the third level. For example, the traffic proportion threshold may be set to twice the sum of the traffic proportion of the application at the second level and the traffic proportion of the application at the third level. It should be noted that the traffic proportion threshold may be set to another value based on a specific scenario requirement. When the traffic proportion of the application at the first level is greater than or equal to twice the sum of the traffic proportion of the application at the second level and the traffic proportion of the application at the third level, it indicates that the entire network is overloaded, and therefore rate limiting needs to be performed for the applications of the terminal device.

In a possible implementation, rate limiting is performed on the application at the first level, the application at the second level, and the application at the third level respectively based on the third rate limit proportions respectively corresponding to the application at the first level, the application at the second level, and the application at the third level.

For example, the traffic proportion of the application at the second level is 15%, and the traffic proportion of the application at the third level is 15%. It is determined that the traffic proportion threshold is 60%, that is, twice the sum of the traffic proportion of the application at the second level and the traffic proportion of the application at the third level. If the traffic proportion of the application at the first level is 70%, which is greater than 60%, in this embodiment of this application, rate limiting is performed on the application at the first level, the application at the second level, and the application at the third level respectively based on the third rate limit proportions respectively corresponding to the application at the first level, the application at the second level, and the application at the third level.

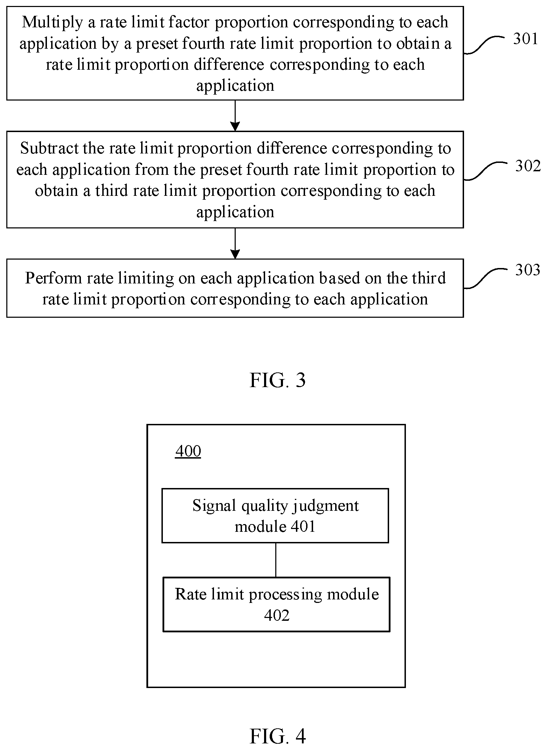

In a possible implementation, in step 202, rate limiting is performed on the application at the first level, the application at the second level, and the application at the third level respectively based on the third rate limit proportions respectively corresponding to the application at the first level, the application at the second level, and the application at the third level, and a procedure thereof is shown in FIG. 3. For any application, the following operations are performed.

In step 301, a preset fourth rate limit proportion is 20% (that is, rate limiting is performed for the application by reducing the current actual rate by 20%), and a rate limit factor proportion corresponding to each application is multiplied by the preset fourth rate limit proportion to obtain a rate limit proportion difference corresponding to each application. The rate limit factor proportion is used to adjust a rate limit degree of the application. It should be noted that rate limit factor proportions of applications at a same level are the same, that is, rate limit factor proportions of application A at the first level and application B at the first level are the same, rate limit factor proportions of application C at the second level and application D at the second level are the same, and rate limit factor proportions of application E at the third level and application F at the third level are the same.

In step 302, the rate limit proportion difference corresponding to each application is subtracted from the preset fourth rate limit proportion to obtain a third rate limit proportion corresponding to each application.

In step 303, rate limiting is performed on each application based on the third rate limit proportion corresponding to each application.

For example, the preset fourth rate limit proportion is 20%, that is, rate limiting is performed for the application by reducing the current actual rate by 20%. In a case that a ratio of rate limit factors of the application at the first level, the application at the second level, and the application at the third level is 2:1:1, that is, a ratio of rate limit factors of the critical application, the common application, and the to-be-suppressed application is 2:1:1, rate limit factor proportions of the application at the first level, the application at the second level, and the application at the third level are 50%, 25%, and 25% respectively, and formulas for calculating the third rate limit proportion corresponding to the application at each level are as follows.

Third rate limit proportion corresponding to the critical application at the first level: (20% - 20% * 2/(2 + 1 + 1)) = 10%.

Third rate limit proportion corresponding to the common application at the second level: (20% - 20% * 1/(2 + 1 + 1)) = 15%.

Third rate limit proportion corresponding to the to-be-suppressed application at the third level: (20% - 20% * 1/(2 + 1 + 1)) = 15%.

Based on the foregoing calculations of the third rate limit proportions of the application at each level, the third rate limit proportions corresponding to the critical application, the to-be-suppressed application, and the common application are obtained and are respectively 10%, 15%, and 15%. In this embodiment of this application, rate limiting by 10% is performed on the critical application, rate limiting by 15% is performed on the to-be-suppressed application, and rate limiting by 15% is performed on the common application.

It should be supplemented that the ratio of rate limit factors is not limited to 2:1:1, and that the rate limit factor proportions of the application at the first level, the application at the second level, and the application at the third level are not limited to 50%, 25%, and 25% either. Different ratios of rate limit factors may be configured for different APs in different scenarios based on a scenario requirement of the user. To preferentially ensure traffic occupancy of the application at the first level, it may be specified that the rate limit factor proportion of the application at the first level is greater than the rate limit factor proportion of the application at the second level and also greater than the rate limit factor proportion of the application at the third level.

In another possible implementation, in step 202, rate limiting is performed on the application at the first level, the application at the second level, and the application at the third level respectively based on the third rate limit proportions respectively corresponding to the application at the first level, the application at the second level, and the application at the third level, and the following steps may be included.

In step 401, a preset fourth rate limit proportion is 20% (that is, rate limiting is performed for the application by reducing the current actual rate by 20%), and a rate limit factor proportion corresponding to each application is multiplied by the preset fourth rate limit proportion to obtain a third rate limit proportion corresponding to each application. The rate limit factor proportion is used to adjust a rate limit degree of the application.

In step 402, rate limiting is performed on each application based on the third rate limit proportion corresponding to each application.

For example, the preset fourth rate limit proportion is 20%, that is, rate limiting is performed for the application by reducing the current actual rate by 20%. Rate limit factor proportions of the application at the first level, the application at the second level, and the application at the third level are 50%, 100%, and 100% respectively, and formulas for calculating the third rate limit proportion corresponding to the application at each level are as follows.

Third rate limit proportion corresponding to the critical application at the first level: 20% * 50% = 10%.

Third rate limit proportion corresponding to the common application at the second level: 20% * 100% = 20%.

Third rate limit proportion corresponding to the to-be-suppressed application at the third level: 20% * 100% = 20%.

Based on the foregoing calculations of the third rate limit proportions of the application at each level, the third rate limit proportions corresponding to the critical application, the to-be-suppressed application, and the common application are obtained and are respectively 10%, 20%, and 20%. In this embodiment of this application, rate limiting by 10% is performed on the critical application, rate limiting by 20% is performed on the to-be-suppressed application, and rate limiting by 20% is performed on the common application.

It should be supplemented that the rate limit factor proportions of the application at the first level, the application at the second level, and the application at the third level are not limited to 50%, 100%, and 100%. Different ratios of rate limit factors may be configured for different APs in different scenarios based on a scenario requirement of the user. To preferentially ensure traffic occupancy of the application at the first level, it may be specified that the rate limit factor proportion of the application at the first level is less than the rate limit factor proportion of the application at the second level and also less than the rate limit factor proportion of the application at the third level.

In a possible implementation, the third rate limit proportion corresponding to the application at each level may also be determined without using the rate limit factor proportion and the fourth rate limit proportion. For example, the third rate limit proportion corresponding to the application at each level is set directly based on a configuration instruction, for example, each is 20%; or based on a configuration instruction, the third rate limit proportion corresponding to the application at the first level is set to 10%, the third rate limit proportion corresponding to the application at the second level is set to 15%, and the third rate limit proportion corresponding to the application at the third level is set to 15%.

In a possible implementation, based on a scenario requirement of the user, any two of the application at the first level, the application at the second level, and the application at the third level are selected for rate liming, or any one thereof is selected for rate liming.

In summary, in this embodiment of this application, it is determined whether the signal quality of the wireless communication environment is less than the preset signal quality threshold, and in the case that the signal quality is less than the preset signal quality threshold, it is determined that the signal quality is poor, and rate limiting is performed on the different applications of the terminal device based on the application levels and traffic proportions of the different applications. In this way, rates of the applications of the terminal are dynamically limited, normal use of critical services is ensured, and high efficiency is achieved, while no manual intervention is needed.

Based on the same inventive concept, this application further provides an apparatus for limiting rates of applications on a terminal device. The apparatus is applied to an access point AP. As shown in FIG. 4, the apparatus 400 includes a signal quality judgment module 401 and a rate limiting module 402. The signal quality judgment module 401 is configured to compare signal quality of a wireless communication environment with a preset signal quality threshold. The rate limiting module 402 is configured to perform rate limiting on the applications of the terminal device based on application levels and traffic proportions of the applications of the terminal device if the signal quality of the wireless communication environment is less than the signal quality threshold.

In a possible implementation, there may be a plurality of applications of the terminal device.

In a possible implementation, the apparatus further includes a signal quality determining module. The signal quality determining module is configured to determine the signal quality of the wireless communication environment based on quality factor information and a weight corresponding to the quality factor information, where the quality factor information includes at least one of the following: channel utilization, a wireless packet loss rate, a wireless retransmission rate, or signal strength of the terminal device connected to the AP.

In a possible implementation, one or more terminal devices may be connected to the AP.

In a possible implementation, the rate limiting module is configured to determine, in response to an application level configuration instruction from an user, the application levels of the applications of the terminal device; or the rate limiting module is configured to determine, based on use frequency of the applications of the terminal device, the application levels of the applications of the terminal device.

In a possible implementation, application levels of the applications of the terminal device are classified into a first level, a second level, and a third level.

In a possible implementation, importance of an application at the first level is higher than importance of an application at the second level, and the importance of the application at the second level is higher than importance of an application at the third level.

In a possible implementation, the rate limiting module is configured to perform the rate limiting on the application of the terminal device based on the application level and the traffic proportion of the application.

In a possible implementation, the rate limiting module is configured to: when a traffic proportion of the application at the first level is less than a traffic proportion threshold, perform rate limiting on the application at the second level based on a preset first rate limit proportion, and perform rate limiting on the application at the third level based on a preset second rate limit proportion.

In a possible implementation, the rate limiting module is configured to: when a traffic proportion of the application at the first level is less than a traffic proportion threshold, perform rate limiting on the application at the second level based on a preset first rate limit proportion, or perform rate limiting on the application at the third level based on a preset second rate limit proportion.

In a possible implementation, the first rate limit proportion and the second rate limit proportion are the same.

In a possible implementation, the first rate limit proportion and the second rate limit proportion are different.

In a possible implementation, the rate limiting module is configured to: when a traffic proportion of the application at the first level is greater than or equal to a traffic proportion threshold, perform rate limiting on the application at the first level, the application at the second level, and the application at the third level respectively based on third rate limit proportions respectively corresponding to the application at the first level, the application at the second level, and the application at the third level.

In a possible implementation, the rate limiting module is configured to: when a traffic proportion of the application at the first level is greater than or equal to a traffic proportion threshold, perform rate limiting on the application at the first level, the application at the second level, and the application at the third level respectively based on a rate limit factor proportions respectively corresponding to the application at the first level, the application at the second level, and the application at the third level.

In a possible implementation, the rate limiting module is configured to: multiply a rate limit factor proportion corresponding to an application at each level by a preset fourth rate limit proportion to obtain a rate limit proportion difference corresponding to the application at each level, where the rate limit factor proportion is used to adjust a rate limit degree of the application; subtract the rate limit proportion difference corresponding to the application at each level from the preset fourth rate limit proportion to obtain a third rate limit proportion corresponding to the application at each level; and perform rate limiting on the application at each level based on the third rate limit proportion corresponding to the application at each level.

In a possible implementation, the rate limiting module is configured to: multiply a rate limit factor proportion corresponding to an application at each level by a preset fourth rate limit proportion to obtain a third rate limit proportion corresponding to the application at each level; and perform rate limiting on the application at each level based on the third rate limit proportion corresponding to the application at each level.

In a possible implementation, the fourth rate limit proportion, the first rate limit proportion, and the second rate limit proportion are the same.

In a possible implementation, the rate limiting module is configured to: determine, in response to a rate limit proportion configuration instruction, the third rate limit proportions respectively corresponding to the application at the first level, the application at the second level, and the application at the third level; and perform the rate limiting on the application at the first level, the application at the second level, and the application at the third level respectively based on the third rate limit proportions respectively corresponding to the application at the first level, the application at the second level, and the application at the third level.

In a possible implementation, the rate limiting module is configured to determine the traffic proportion threshold based on a traffic proportion of the application at the second level and a traffic proportion of the application at the third level; or the rate limiting module is configured to determine the traffic proportion threshold in response to a traffic proportion threshold configuration instruction.

In summary, in this embodiment of this application, it is determined whether the signal quality of the wireless communication environment is less than the preset signal quality threshold; and in the case that the signal quality is less than the preset signal quality threshold, it is determined that the signal quality is poor, and rate limiting is performed on the different applications of the terminal device based on the application levels and traffic proportions of the different applications. In this way, rates of the applications of the terminal are dynamically limited, normal use of critical services is ensured, and high efficiency is achieved, while no manual intervention is needed.

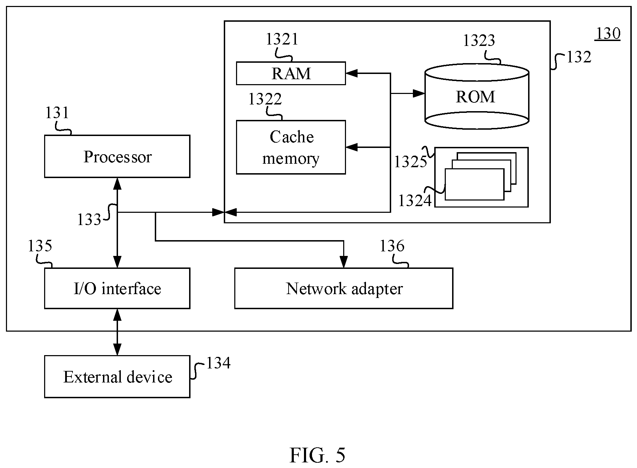

FIG. 5 is a schematic diagram of a structure of an electronic device according to an embodiment of this application. The electronic device 130 is represented in a form of a general-purpose electronic device. Components of the electronic device 130 may include but are not limited to: at least one processor 131, at least one memory 132, and a bus 133 connecting different system components (including the memory 132 and the processor 131).

The bus 133 represents one or more types of bus structures, including a memory bus or a memory controller, a peripheral bus, a processor, or a local area bus using any bus structure in a plurality of bus structures.

The memory 132 may include a readable medium in a form of a volatile memory, such as a random access memory (RAM) 1321 and/or a cache memory 1322, and may further include a read-only memory (ROM) 1323.

The memory 132 may further include a program/utility tool 1325 having a group of (at least one) program modules 1324. Such program modules 1324 include but are not limited to an operating system, one or more application programs, other program modules, and program data. Each of these examples or a combination thereof may include an implementation of a network environment.

The electronic device 130 may also communicate with one or more external devices 134 (such as a keyboard or a pointing device), and may further communicate with one or more devices that enable a user to interact with the electronic device 130, and/or communicate with any device (for example, a router or a modem) that enables the electronic device 130 to communicate with one or more other electronic devices. The communication may be performed by using an input/output (I/O) interface 135. In addition, the electronic device 130 may further communicate with one or more networks (for example, a local area network (LAN), a wide area network (WAN), and/or a public network, such as the Internet) by using a network adapter 136. As shown in the figure, the network adapter 136 is configured to communicate with other modules of the electronic device 130 by using the bus 133. It should be understood that although not shown in the figure, other hardware and/or software modules can be used in combination with the electronic device 130, including but not limited to: microcode, a device driver, a redundant processor, an external disk drive array, a RAID system, a tape drive, a data backup storage system, and the like.

In this embodiment of this application, the memory 132 stores instructions that can be executed by the at least one processor 131, and the at least one processor 131 may be configured to perform, by executing the instructions stored in the memory 132, the steps of the method disclosed in the embodiments of this application.

An exemplary embodiment of this application further provides a computer-readable storage medium including instructions, such as the memory 132 including instructions, where the instructions may be executed by the processor 131 of the electronic device 130 to implement the foregoing method for limiting rates of applications on a terminal device. The computer-readable storage medium may be a non-transitory computer-readable storage medium. For example, the non-transitory computer-readable storage medium may be a ROM, a random access memory (RAM), a CD-ROM, a magnetic tape, a floppy disk, or an optical data storage device.

An exemplary embodiment further provides a computer program product including a computer program. When the computer program is executed by the processor 131, the foregoing method for limiting rates of applications on a terminal device according to this application is implemented.

A person skilled in the art should understand that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the other programmable data processing device generate an apparatus for implementing a specific function in one or more procedures in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

Alternatively, these computer program instructions may be loaded onto a computer or another programmable data processing device, so that a series of operations and steps are performed on the computer or the other programmable device, to generate computer-implemented processing. Therefore, the instructions executed on the computer or the other programmable device provide steps for implementing a specific function in one or more processes in the flowcharts and/or in one or more blocks in the block diagrams.

Apparently, a person skilled in the art can make various changes and variations to this application without departing from the spirit and scope of this application. Therefore, this application is also intended to cover the changes and variations provided that the changes and variations of this application fall within the scope of the claims of this application or equivalent technologies thereof.

## Claims

1. A method for limiting rates of applications on a terminal device, applied to an access point AP, wherein the method comprises:
comparing signal quality of a wireless communication environment with a preset signal quality threshold; and
in a case that the signal quality of the wireless communication environment is less than the signal quality threshold, performing rate limiting on the applications of the terminal device based on application levels and traffic proportions of the applications of the terminal device.

2. The method according to claim 1, wherein before the comparing the signal quality of the wireless communication environment with the preset signal quality threshold, the method further comprises:
determining the signal quality of the wireless communication environment based on quality factor information and a weight corresponding to the quality factor information.

3. The method according to claim 2, wherein the quality factor information comprises at least one of the following: channel utilization, a wireless packet loss rate, a wireless retransmission rate, or signal strength of the terminal device connected to the AP.

4. The method according to claim 1, wherein before the performing the rate limiting on the applications of the terminal device based on the application levels and the traffic proportions of the applications of the terminal device, the method further comprises:
determining, in response to an application level configuration instruction, the application levels of the applications of the terminal device.

5. The method according to claim 1, wherein before the performing the rate limiting on the applications of the terminal device based on the application levels and the traffic proportions of the applications of the terminal device, the method further comprises:
determining, based on use frequency of the applications of the terminal device, the application levels of the applications of the terminal device.

6. The method according to any one of claims 1 to 5, wherein the application levels comprise a first level, a second level, and a third level, wherein importance of an application at the first level is higher than importance of an application at the second level, and the importance of the application at the second level is higher than importance of an application at the third level.

7. The method according to claim 6, wherein the performing the rate limiting on the applications of the terminal device based on the application levels and the traffic proportions of the applications of the terminal device comprises:
when a traffic proportion of an application at the first level is less than a traffic proportion threshold, performing rate limiting on an application at the second level based on a preset first rate limit proportion, and performing rate limiting on an application at the third level based on a preset second rate limit proportion.

8. The method according to claim 6, wherein the performing the rate limiting on the applications of the terminal device based on the application levels and the traffic proportions of the applications of the terminal device comprises:
when a traffic proportion of an application at the first level is less than a traffic proportion threshold, performing rate limiting on an application at the second level based on a preset first rate limit proportion, or performing rate limiting on an application at the third level based on a preset second rate limit proportion.

9. The method according to claim 7 or 8, wherein the first rate limit proportion and the second rate limit proportion are the same.

10. The method according to claim 6, wherein the performing the rate limiting on the applications of the terminal device based on the application levels and the traffic proportions of the applications of the terminal device comprises: when a traffic proportion of the application at the first level is greater than or equal to a traffic proportion threshold, performing rate limiting on the application at the first level, the application at the second level, and the application at the third level respectively based on third rate limit proportions respectively corresponding to the application at the first level, the application at the second level, and the application at the third level.

11. The method according to claim 10, wherein the performing the rate limiting on the application at the first level, the application at the second level, and the application at the third level respectively based on the third rate limit proportions respectively corresponding to the application at the first level, the application at the second level, and the application at the third level comprises:
multiplying a rate limit factor proportion corresponding to an application at each level by a preset fourth rate limit proportion to obtain a rate limit proportion difference corresponding to the application at each level, wherein the rate limit factor proportion is used to adjust a rate limit degree of the application;
subtracting the rate limit proportion difference corresponding to the application at each level from the preset fourth rate limit proportion to obtain a third rate limit proportion corresponding to the application at each level; and
performing rate limiting on the application at each level based on the third rate limit proportion.

12. The method according to claim 10, wherein the performing the rate limiting on the application at the first level, the application at the second level, and the application at the third level respectively based on the third rate limit proportions respectively corresponding to the application at the first level, the application at the second level, and the application at the third level comprises:
multiplying a rate limit factor proportion corresponding to the application by a preset fourth rate limit proportion to obtain a rate limit proportion difference corresponding to the application, wherein the rate limit factor proportion is used to adjust a rate limit degree of the application;
subtracting the rate limit proportion difference corresponding to the application from the preset fourth rate limit proportion to obtain a third rate limit proportion corresponding to the application; and
performing rate limiting on the application based on the third rate limit proportion.

13. The method according to claim 10, wherein the performing the rate limiting on the application at the first level, the application at the second level, and the application at the third level respectively based on the third rate limit proportions respectively corresponding to the application at the first level, the application at the second level, and the application at the third level comprises:
multiplying a rate limit factor proportion corresponding to an application at each level by a preset fourth rate limit proportion to obtain a third rate limit proportion corresponding to the application at each level; and
performing rate limiting on the application at each level based on the third rate limit proportion.

14. The method according to claim 10, wherein the performing the rate limiting on the application at the first level, the application at the second level, and the application at the third level respectively based on the third rate limit proportions respectively corresponding to the application at the first level, the application at the second level, and the application at the third level comprises:
determining, in response to a rate limit proportion configuration instruction, the third rate limit proportions respectively corresponding to the application at the first level, the application at the second level, and the application at the third level; and
performing the rate limiting on the application at the first level, the application at the second level, and the application at the third level respectively based on the third rate limit proportions respectively corresponding to the application at the first level, the application at the second level, and the application at the third level.

15. The method according to any one of claims 7 to 14, wherein before the performing the rate limiting on the applications of the terminal device based on the application levels and the traffic proportions of the applications of the terminal device, the method further comprises:
determining the traffic proportion threshold based on a traffic proportion of the application at the second level and a traffic proportion of the application at the third level.

16. The method according to any one of claims 7 to 14, wherein before the performing the rate limiting on the applications of the terminal device based on the application levels and the traffic proportions of the applications of the terminal device, the method further comprises:
determining the traffic proportion threshold in response to a traffic proportion threshold configuration instruction.

17. An apparatus for limiting rates of applications on a terminal device, applied to an access point AP, wherein the apparatus comprises:
a signal quality judgment module, configured to compare signal quality of a wireless communication environment with a preset signal quality threshold; and
a rate limiting module, configured to perform rate limiting on the applications of the terminal device based on application levels and traffic proportions of the applications of the terminal device in a case that the signal quality of the wireless communication environment is less than the signal quality threshold.

18. The apparatus according to claim 17, wherein the apparatus further comprises:
a signal quality determining module, configured to determine the signal quality of the wireless communication environment based on quality factor information and a weight corresponding to the quality factor information, wherein
the quality factor information comprises at least one of the following: channel utilization, a wireless packet loss rate, a wireless retransmission rate, or signal strength of the terminal device connected to the AP.

19. An electronic device, comprising a processor and a memory, wherein
the memory is configured to store processor-executable instructions; and
the processor is configured to execute the processor-executable instructions to implement the method for limiting rates of applications on a terminal device according to any one of claims 1 to 16.

20. A computer-readable storage medium, wherein when instructions in the computer-readable storage medium are executed by a processor in an electronic device, the electronic device is enabled to perform the method for limiting rates of applications on a terminal device according to any one of claims 1 to 16.
